# EUROPÄISCHE PATENTANMELDUNG

(11) **EP 1 845 602 A1**
(43) Veröffentlichungstag der Anmeldung: **17.10.2007**
(21) Anmeldenummer: 06112531.6
(22) Anmeldetag: 12.04.2006
(51) Int. Cl.: H02J 13/00

(54) **Überwachungssystem**

(71) Anmelder: Servatec GmbH & Co. KG, 57627 Hachenburg (DE)
(72) Erfinder: Brenner, Josef, 57627 Hachenburg (DE)
(74) Vertreter: Selting, Günther

(57) **Zusammenfassung**

Ein Überwachungssystem zur Überwachung des Einschaltzustandes elektrischer Geräte (14) weist eine zentral angeordnete Anzeigevorrichtung (11) auf, an die per Funk die Zustandssignale der einzelnen Geräte übermittelt werden. Dem Gerät (14) ist ein Zustandsmelder (10) zugeordnet, der mit dem Gerät in Reihe an Versorgungsleitungen (13) angeschlossen ist. Die Zustandsmelder enthalten jeweils einen Stromwächter mit Hall-Sensor. Dadurch wird der Detektionsaufwand für den Strom verringert.

## Beschreibung

Die Erfindung betrifft ein Überwachungssystem zur Überwachung und Meldung der Betriebszustände von elektrischen Geräten.

Es ist häufig zweckmäßig, den Betriebszustand von elektrischen Geräten, die an verschiedenen Stellen angeordnet sind, an einer Anzeigevorrichtung kenntlich zu machen. Anwendungsfälle hierfür sind beispielsweise das Überwachen elektrischer Geräte in Wohnungen oder Haushalten, um beim Verlassen der Wohnung festzustellen, ob noch eines der elektrischen Geräte eingeschaltet ist, oder das Überwachen des Einschaltzustandes von Maschinen in Fabriken an einer zentralen Stelle.

Der Erfindung liegt die Aufgabe zugrunde, ein Überwachungssystem für elektrische Geräte zu schaffen, das einfach aufgebaut und leicht zu installieren ist.

Das Überwachungssystem der vorliegenden Erfindung ist durch den Anspruch 1 definiert. Es weist die folgenden Komponenten auf:
- eine Anzeigevorrichtung zur Anzeige eingeschalteter Geräte,
- Zustandsmeldern, die jeweils einen Stromwächter zur Erkennung eines Stromflusses durch das Gerät,
- einen dem Zustandsmelder zugeordneten Sender, der drahtlose Signale aussendet, wenn das Gerät eingeschaltet ist,
- einen der Anzeigevorrichtung zugeordneten Empfänger, der die Signale sämtlicher Sender empfängt und eine den Signalen entsprechende Anzeige veranlasst,
- wobei der Stromwächter einen mit dem Gerät in Reihe liegenden oder synchron mit dem Gerät schaltbaren Magnetfelderzeuger und einen das Magnetfeld des Magnetfelderzeugers erkennenden Hall-Sensor aufweist.

Das Überwachungssystem sieht vor, dass der das Gerät durchfließende Strom ein Magnetfeld erzeugt, das von einem Hall-Sensor erkannt wird. Ein Vorteil dieses Merkmals besteht darin, dass kein Reihenwiderstand benötigt wird, an dem bei hohem Laststrom ein großer Spannungsabfall entstehen würde. Ein solcher Reihenwiderstand würde insbesondere bei Geräten, die einen hohen Stromverbrauch haben, einen erheblichen Spannungsabfall verursachen. Durch Verwendung eines Magnetfelderzeugers wird ein geringer Ohmscher Widerstand realisiert mit der Folge, dass der hierdurch bedingte Spannungsabfall ebenfalls gering ist. Der Magnetfelderzeuger funktioniert über einen weiten Leistungsbereich von anzuschließenden elektrischen Geräten. Er kann kleinformatig ausgeführt werden, so dass das Überwachungssystem leicht in bestehende Elektroinstallationsanlagen eingebaut werden kann.

Der im Zustandsmelder enthaltene Sender kann einen Modulator enthalten, der eine Trägerfrequenz mit einem die Identität des Gerätes angebenden Signal moduliert. Die Signale geben beispielsweise die laufenden Nummern der Geräte an. In der Anzeigevorrichtung werden die laufenden Nummern in die Bezeichnungen der Geräte dekodiert, beispielsweise in die Bezeichnung "Herd" oder "Bügeleisen". Dadurch wird angezeigt, dass die Geräte Herd bzw. Bügeleisen eingeschaltet sind.

Das Überwachungssystem kann so aufgebaut sein, dass die Anzeigevorrichtung sich beispielsweise in der Nähe der Wohnungstür oder Haustür befindet. Die Anzeigevorrichtung liefert eine Anzeige derjenigen elektrischen Geräte, die jeweils in Betrieb sind. Beim Verlassen der Wohnung oder des Hauses kann der Benutzer leicht feststellen, welche Geräte noch eingeschaltet sind. Auf diese Weise wird vermieden, dass beispielsweise ein Bügeleisen oder ein elektrisches Heizgerät oder ein Herd unbeaufsichtigt eingeschaltet bleibt. Ein anderes Anwendungsgebiet sind Gewerbebetriebe oder Fabriken, in denen die Einschaltzustände von Maschinen zentral angezeigt werden können.

Das erfindungsgemäße Überwachungssystem, bei dem die Signalübertragung drahtlos erfolgt, ist leicht zu installieren, weil keine elektrischen Leitungen verlegt werden müssen. Die Zustandsmelder, die in der Nähe der überwachten Geräte zu installieren sind, befinden sich in den Versorgungsleitungen der betreffenden Geräte und sie werden von dort auch mit dem für das Funktionieren erforderlichen geringen Strom versorgt. Somit sind für die Zustandsmelder keine Batterien erforderlich, die eine zusätzliche Störungs- oder Fehlerquelle bilden könnten. Da die Zustandsmelder aus demselben Versorgungsnetz wie die überwachten Geräte gespeist werden, funktionieren sie immer dann, wenn das Gerät eingeschaltet ist. Hierdurch ist die Betriebssicherheit des Überwachungssystems erhöht.

Eine besonders einfache Installationsmögtichkeit für das Überwachungssystem ergibt sich, wenn gemäß einer bevorzugten Weiterbildung der Erfindung der Stromwächter mit dem Sender einen Zustandsmelder bildet, der als Bauteil in eine Wanddose zur Aufnahme einer Steckdose hineinpasst. In diesem Fall kann der Zustandsmelder in Form einer Scheibe in die Wanddose eingesetzt und mit der später in die Wanddose eingesetzten Steckdose in Reihe an eine der in der Wand installierten Versorgungsleitungen angeschlossen werden. Dieser Aspekt der Erfindung nutzt den Umstand, dass eine Steckdose die zugehörige Wanddose nicht vollständig ausfüllt, sondern noch Platz belässt. Dieser Platz vor dem Boden der Wanddose wird zur Unterbringung des Zustandsmelders benutzt. Der Zustandsmelder ist dann für den Benutzer überhaupt nicht mehr sichtbar. Der Anschluss des Gerätes an die Steckdose erfolgt in üblicher Weise durch Einstecken des Gerätesteckers in die Steckdose.

Eine andere bevorzugte Ausgestaltung der Erfindung sieht vor, dass der Zustandsmelder als Bauteil in eine Aufnahme für einen Sicherungsautomaten in einem Sicherungskasten passt. Hierbei ist der Zustandsmelder in das installierte Stromnetz integriert, so dass er für den Benutzer nicht in Erscheinung tritt.

Der Stromwächter kann einen integrierten Schaltkreis (IC) enthalten, der über eine Gleichrichterschaltung nur dann mit Spannung versorgt wird, wenn das zu überwachende Gerät eingeschaltet ist. Der IC benötigt also keine eigene Stromversorgung. Die Gleichspannung zur Versorgung des IC wird durch einen aus der Netzspannung gewonnenen Spannungsabfall erzeugt. Somit bildet der Zustandsmelder ein autarkes Gerät, weiches dadurch funktionsfähig wird, dass es mit dem zu überwachenden Gerät in Reihe geschaltet wird, also, indem es in einem geschlossenen Stromkreis enthalten ist.

Im Folgenden werden unter Bezugnahme auf die Zeichnungen Ausführungsbeispiele der Erfindung näher erläutert.

Es zeigen:
- Figur 1: eine schematische Darstellung des Funksystems zur Überwachung der Betriebszustände mehrerer elektrischer Geräte,
- Figur 2: ein Ausführungsbeispiel des Stromwächters,
- Figur 3: eine Frontansicht einer Steckdose, in die der Zustandsmelder eingebaut ist,
- Figur 4: eine schematische Draufsicht der Steckdose nach Figur 3 mit den elektrischen Verbindungen des Zustandsmelders, und

- Figur 5: ein Ausführungsbeispiel, bei dem der Zustandsmelder einen elektrisch gesteuerten Schalter eines Gerätes überwacht.

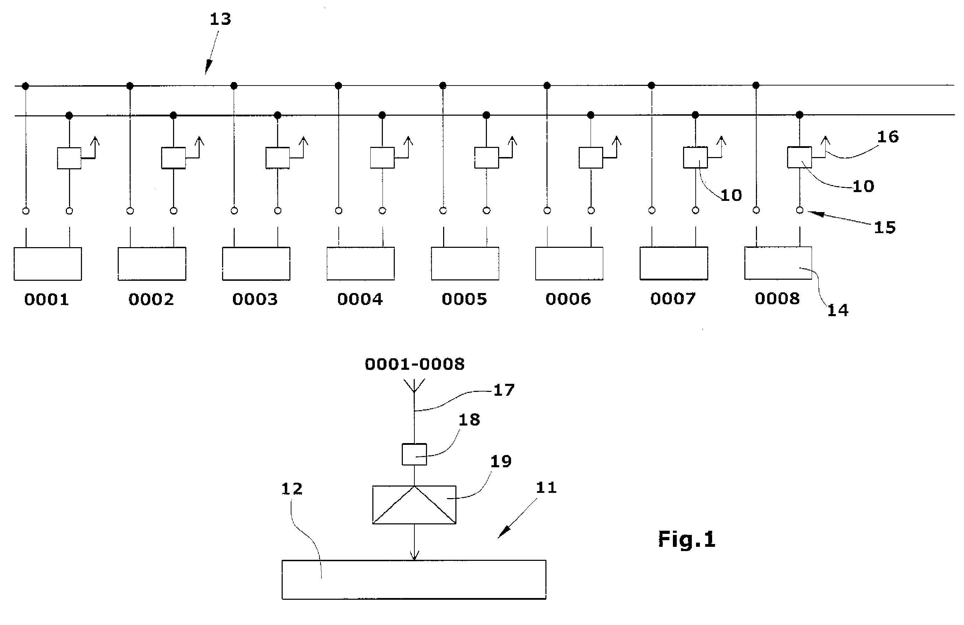

Figur 1 zeigt ein Funksystem aus mehreren Zustandsmeldern 10 und einer zentralen Anzeigevorrichtung 11. Die Zustandmelder haben jeweils individuelle Adressen von "0001" bis "0008". Die Anzeigevorrichtung 11 empfängt die Funksignale sämtlicher Zustandsmelder 10 und liefert in einem Anzeigefeld 12 eine entsprechende lesbare Anzeige.

In Figur 1 sind Versorgungsleitungen 13 dargestellt, die das Wechselspannungs-Versorgungsnetz von 50 Hz und 230 V repräsentieren. An die Versorgungsleitungen können die einzelnen Geräte 14 angeschlossen werden. Hierzu dient eine Anschlussvorrichtung 15, die zwei von den Versorgungsleitungen 13 abzweigende Leitungen enthält. In eine dieser Leitungen ist der Zustandsmelder 10 geschaltet, der somit elektrisch in Reihe mit dem Gerät 14 liegt. Der Zustandsmelder 10 reagiert auf den das Gerät 14 durchfließenden Strom. Er weist eine Antenne 16 auf, die im Falle eines fließenden Stromes ein Funksignal liefert, welches auch die Adresse des betreffenden Geräts 14 angibt, also beispielsweise die Adresse "0008". Dieses Funksignal wird von einer Antenne 17 der Anzeigevorrichtung 11 empfangen und einem Empfänger 18 zugeführt. Ein Modulator 19 erzeugt aus der empfangenen Adresse eine Bezeichnung, die der Benutzer zuvor eingegeben hat, z.B. die Bezeichnung "Herd" oder "Licht". Im Anzeigefeld 12 wird diese Bezeichnung angezeigt. Das Anzeigefeld 12 ist imstande, mehrere Bezeichnungen gleichzeitig oder nacheinander anzuzeigen.

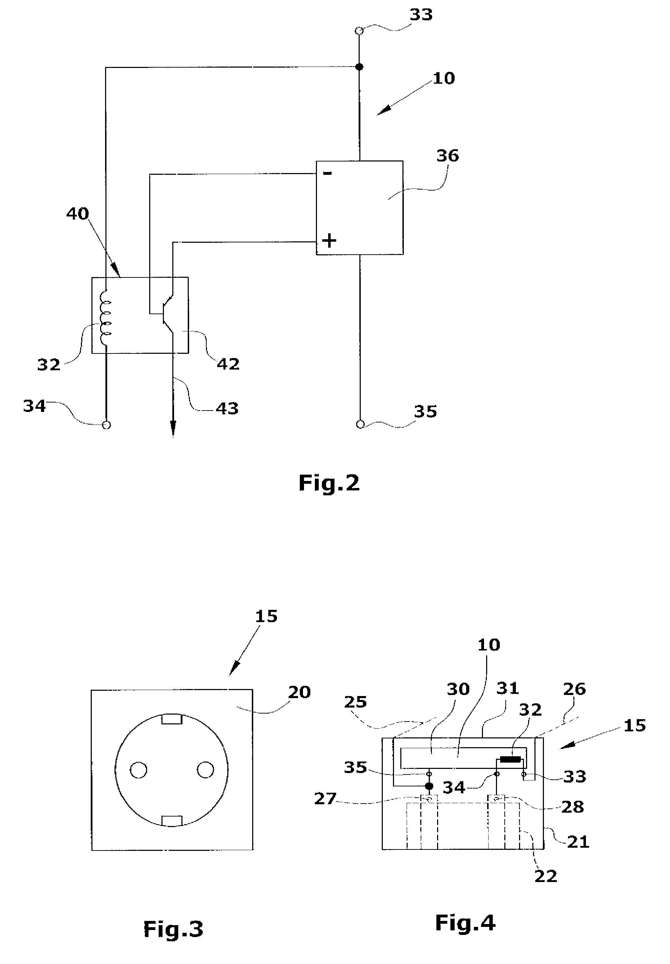

Die Figuren 3 und 4 zeigen eine spezielle Ausgestaltung der Anschlussvorrichtung 15, die hier als Steckdose 20 ausgebildet ist. Die Steckdose 20 ist an einer in Figur 4 schematisch dargestellten Wanddose 21 in üblicher Weise befestigt, wobei der Steckdosensockel 22 mit Krallen in der Wanddose verspannt ist. Aus der Wand führen Leitungen 25 und 26 in die Wanddose 21 hinein. Die Leitung 25 ist direkt mit einer Anschlussklemme 27 des Steckdosen sockels 22 verbunden. Die Leitung 26 führt über einen Zustandsmelder 10 zu einer Anschlussklemme 28 des Steckdosensockels 22. Der Zustandsmelder 10 besteht aus einem scheibenförmigen vergossenen Block 30, der elektrische Komponenten enthält. Dieser Block ist über dem Boden 31 der Wanddose 21 angeordnet. Er befindet sich in einem Raum der Wanddose, der hinter dem Steckdosensockel 22 liegt und von diesem freigelassen wird. Der Zustandsmelder 10 enthält unter anderem einen Magnetfelderzeuger 32 in Form einer Spule, die in Reihe zwischen die Leitung 26 und die Anschlussklemme 28 geschaltet ist. Zu diesem Zweck sind an dem Zustandsmelder zwei Anschlussklemmen 33 und 34 vorgesehen. An eine weitere Anschlussklemme 35 des Zustandsmelders 10 wird die Leitung 25 angeschlossen. Im Übrigen enthält der Zustandsmelder sonst keine Zugänge. Er ist mit der in Figur 4 nicht dargestellten Antenne 14 versehen und enthält einen (nicht dargestellten) Modulator, der die Adresse liefert, sowie einen Sender.

Bei dem Ausführungsbeispiel von Figur 2 ist die Phasenleitung des Versorgungsnetzes mit der Anschlussklemme 33 verbunden und der NulIleiter ist mit der Anschlussklemme 35 verbunden. Zwischen den Anschlussklemmen 33 und 35 liegt ein Netzteil 36, das eine Gleichrichterschaltung enthält und aus der vom Netz gelieferten Wechselspannung eine reduzierte Gleichspannung erzeugt. Die Gleichspannung wird einem Stromwächter 40 zugeführt, der den Magnetfelderzeuger 32 und einen Hall-Sensor 42 enthält. Der Magnetfelderzeuger 32 ist eine mit den Anschlussklemmen 33 und 34 verbundene Spule und der Hall-Sensor enthält einen magnetfeldabhängigen Transistor, dessen Kollektor über eine Leitung 43 mit dem (nicht dargestellten) Modulator verbunden ist. An Leitung 43 entsteht das Signal, das den Zustand des zum Verbraucher fließenden Stromes angibt. Dieses Signal ist ein binäres Signal. Der Modulator versieht dieses Signal mit der Adresse des betreffenden Zustandsmelders.

Das Netzteil 36 ist Bestandteil eines integrierten Schaltkreises IC, ebenso wie der Hall-Sensor 42. Beide sind in dem Block 30 vergossen.

Dieses Ausführungsbeispiel eignet sich insbesondere für solche Überwachungssysteme, die in einer Wohnung oder einem Büro installiert werden.

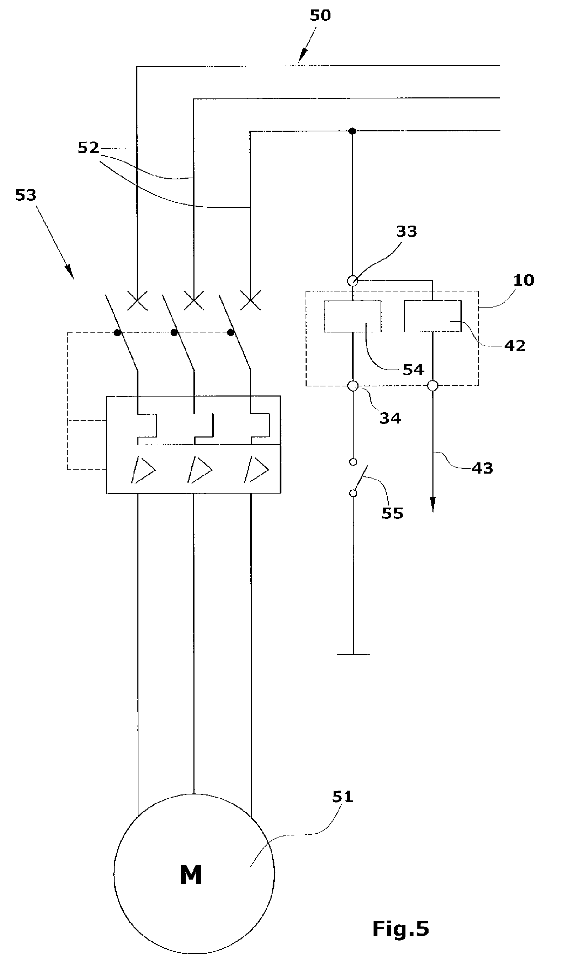

Figur 5 zeigt ein Ausführungsbeispiel, bei dem ein aus drei Phasenleitungen bestehendes Drehstromnetz 50 dazu dient, ein Gerät, wie z.B. ein Motor 51, zu speisen. In die von dem Netz 50 abzweigenden Phasenleitungen 52 ist ein dreiphasiges Schütz 53 geschaltet, das von einer Magnetspule 54 betätigt wird. Zwischen eine der Phasenleitungen und Erdpotential ist ein Zustandsmelder 10 geschaltet, der in gleicher Weise ausgebildet ist wie derjenige von Figur 2. Der Zustandsmelder enthält ein Netzteil 36, einen Stromwächter 40 und einen Hall-Sensor 42 sowie einen Modulator und einen Sender. Die Anschlussklemme 34 ist über einen Schalter 55 an Erde gelegt. Der Schalter 55 ist mit dem Schütz 53 gekoppelt. Beim Schließen des Schalters 55 schließt auch das Schütz 53 und der Motor 51 wird eingeschaltet. Die Magnetspule 54 wird zugleich als Magnetfelderzeuger innerhalb des Zustandsmelders 10 benutzt. Der Zustandsmelder enthält u.a. den Hall-Sensor 42, der auf das Magnetfeld des Magnetfelderzeugers 54 reagiert. Das Signal des Hall-Sensors 42 wird von einem (nicht dargestellten) Sender an eine Anzeigevorrichtung gesendet. An der Anzeigevorrichtung wird auf diese Weise der Einschaltzustand des Motors 51 angezeigt.

## Patentansprüche

1. Überwachungssystem zur Überwachung und Meldung der Betriebszustände von elektrischen Geräten (14), mit
- einer Anzeigevorrichtung (11) zur Anzeige eingeschalteter Geräte (14),
- Zustandsmeldern (10), die jeweils einen Stromwächter (30) zur Erkennung eines Stromflusses durch das Gerät (14) aufweisen,
- einem dem Zustandsmelder (10) zugeordneten Sender, der drahtlose Signale aussendet, wenn das Gerät (14) eingeschaltet ist,
- einem der Anzeigevorrichtung (11) zugeordneten Empfänger, der die Signale sämtlicher Sender empfängt und eine den Signalen entsprechende Anzeige veranlasst,
- wobei der Stromwächter (40) einen mit dem Gerät (14) in Reihe liegenden oder synchron mit dem Gerät (14) schaltbaren Magnetfelderzeuger (32) und einen das Magnetfeld des Magnetfelderzeugers erkennenden Hall-Sensor (42) aufweist.

2. Überwachungssystem nach Anspruch 1, **dadurch gekennzeichnet, dass** der Zustandsmelder (10) in einem Block (30) enthalten ist, der als einteiliges Bauteil in eine Wanddose (21) zur Aufnahme einer Steckdose (20) hineinpasst.

3. Überwachungssystem nach Anspruch 1 oder 2, **dadurch gekennzeichnet, dass** der Stromwächter (40) einen IC enthält, der über ein Netzteil (36) nur dann mit Spannung versorgt wird, wenn das zu überwachende Gerät (14) eingeschaltet ist.

4. Überwachungssystem nach einem der Ansprüche 1 bis 3, **dadurch gekennzeichnet, dass** dem Sender ein Modulator zugeordnet ist, der das Sendesignal mit einem die Identität des Gerätes (14) angebenden Signal moduliert.

5. Überwachungssystem nach einem der Ansprüche 1 bis 4, **dadurch gekennzeichnet, dass** der Magnetfielderzeuger (32) mit dem überwachten Gerät (14) in Reihe an eine Netzspannung anschaltbar ist.

6. Überwachungssystem nach einem der Ansprüche 1 bis 5, **dadurch gekennzeichnet, dass** das überwachte Gerät (51) ein elektrisch gesteuertes Schütz (53) aufweist, und dass der Zustandsmelder (10) mit einem von dem Schütz (53) betätigten oder gesteuerten Schalter in Reihe liegt.

7. Überwachungssystem nach einem der Ansprüche 1 bis 6, **dadurch gekennzeichnet, dass** die Signale eine Angabe der Adresse des betreffenden Zustandsmelders enthalten, und dass in der Anzeigevorrichtung (11) die Adressensignale dekodiert und als Bezeichnung des Gerätes (14), dem der Sender zugeordnet ist, zur Anzeige gebracht wird.
